# EUROPÄISCHE PATENTSCHRIFT

(11) **EP 2 537 628 B1**
(45) Veröffentlichungstag und Bekanntmachung des Hinweises auf die Patenterteilung: **20.11.2013**
(21) Anmeldenummer: 12004502.6
(22) Anmeldetag: 14.06.2012
(51) Int. Cl.: B23Q 1/48, B23Q 1/54

(54) **Bearbeitungsmaschine**
Machining unit
Machine de traitement

(30) Priorität: 24.06.2011 DE 102011106230
(43) Veröffentlichungstag der Anmeldung: 26.12.2012
(73) Patentinhaber: Reichenbacher Hamuel GmbH, 96487 Dörfles-Esbach (DE)
(72) Erfinder: Czwielong, Thomas, 96271 Grub am Forst (DE); Zarske, Wolfgang, 96465 Neustadt (DE)
(74) Vertreter: Paustian, Othmar

(56) Entgegenhaltungen:
- DE-A1- 19 507 989

## Beschreibung

Die Erfindung bezieht sich auf eine Bearbeitungsmaschine gemäß dem Oberbegriff von Anspruch 1.

Eine gattungsgemäße Bearbeitungsmaschine ist aus DE 195 07 989 A1 bekannt.

Bearbeitungsmaschinen mit einem um eine Drehachse drehbaren Haltearm, an dem wiederum ein Bearbeitungsaggregat um eine Schwenkachse schwenkbar gelagert ist, die senkrecht zur Drehachse verläuft, ermöglichen es, ein Werkstück nicht nur von einer Seite - beispielsweise vertikal von oben - zu bearbeiten, sondern auch die unmittelbar daran anschließenden Seiten des Werkstücks durch Verschwenken des Bearbeitungsaggregats zu bearbeiten, z. B. durch Verschwenken des Bearbeitungsaggregates von einer vertikalen in eine horizontale Ausrichtung bzw. Arbeitsstellung. Zur Bearbeitung der Unterseite des Werkstücks wird dieses umgespannt.

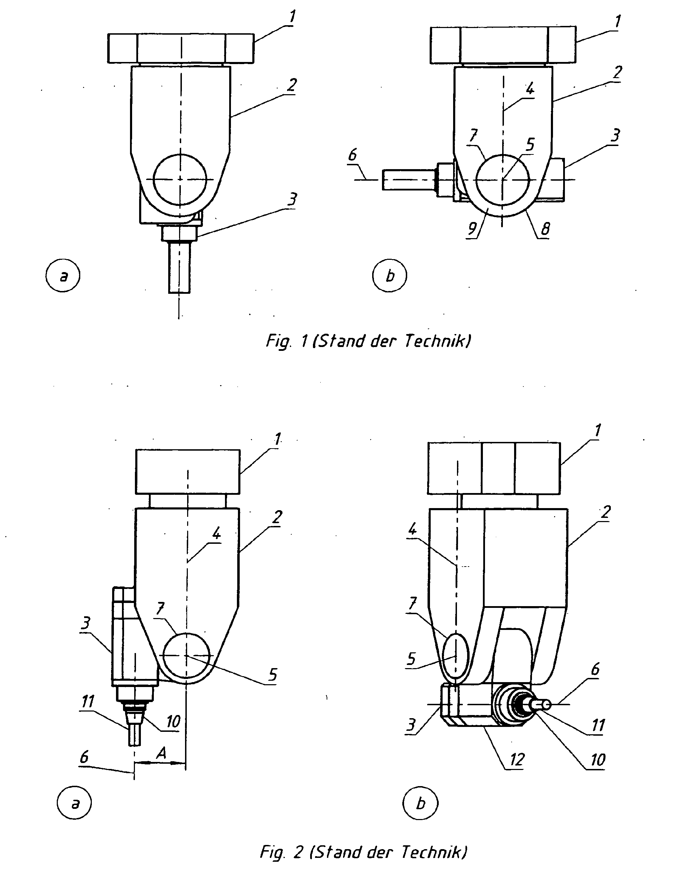

Schlitten, Haltearme und Bearbeitungsaggregate derartiger vorbekannter Bearbeitungsmaschinen sind in den Figuren 1 und 2 dargestellt.

Im Rahmen dieser Anmeldung wird eine Arbeitsstellung des Bearbeitungsaggregats bzw. der Bearbeitungsmaschine gemäß den Figuren 1 a und 2a auch als "Grundstellung" bezeichnet.

Ferner wird im Rahmen dieser Anmeldung mit dem Begriff "Unterseite des Werkstücks" die dem Schlitten abgewandte Seite des Werkstücks verstanden.

In Figur 1 sind Schlitten 1, Haltearm 2 und Bearbeitungsaggregat 3 einer ersten vorbekannten Bearbeitungsmaschine mit vertikaler (Figur 1a) und mit horizontaler (Figur 1 b) Arbeitsstellung des Bearbeitungsaggregates 3 dargestellt. In der horizontalen Arbeitsstellung sind die in Richtung der Rotationsachse 6 aufbringbaren Bearbeitungskräfte geringer als in der vertikalen Arbeitsstellung bzw. Grundstellung, da aufgrund des Hebelarms der horizontalen Bearbeitungskräfte Biegebelastungen auf Haltearm 2 und Schlitten 1 ausgeübt werden. Deren Biegesteifigkeit ist jedoch geringer als deren Drucksteifigkeit. Daher können konzentrisch zur Drehachse 4, d. h. ohne Erzeugung einer Biegebelastung, größere bzw. die größten Bearbeitungskräfte aufgebracht werden. Da ein die Schwenkachse 5 ausbildendes Schwenklager 7 einen ausreichenden Abstand zu den Rändern 8 des Haltearms 2 aufweisen muss, ragt das freie Ende 9 des Haltearms 2 bei horizontaler Arbeitsstellung des Bearbeitungsaggregats 3 über dieses hinaus. Daher muss ein entsprechend großer Freiraum unterhalb des zu bearbeitenden Werkstücks vorgesehen werden, um eine Bearbeitung des Werkstücks bis zu dessen Seitenunterkante zu ermöglichen.

Eine Bearbeitungsmaschine der eingangs genannten Art ist in Figur 2 dargestellt. Bei dieser Bearbeitungsmaschine ist das Bearbeitungsaggregat 3 mit Abstand zum Schwenklager 7 angeordnet, d. h. die Rotationsachse 6 der Werkzeugaufnahme 10 weist einen Abstand zur Schwenkachse 5 auf. Hierdurch wird der Arbeitsraum für das Werkzeug 11 vergrößert. Insbesondere wird auch der unterhalb des zu bearbeitenden Werkstücks benötigte Freiraum verringert, da der benötigte Freiraum in horizontaler Arbeitsstellung des Bearbeitungsaggregats 3 (Figur 2b) lediglich dem Abstand zwischen Rotationsachse 6 und Gehäuseaußenseite 12 des Bearbeitungsaggregats entspricht. Allerdings ist durch den Abstand A zwischen Schwenkachse 5 und Rotationsachse 6 in der vertikalen Arbeitsstellung bzw. Grundstellung (Figur 2a) ein Hebelarm zwischen Rotationsachse 6 und Drehachse 4 vorhanden, so dass die Bearbeitungskräfte in Richtung der Rotations- bzw. der Drehachse nicht mehr konzentrisch, sondern exzentrisch zur Drehachse 4 aufgebracht werden. Die Steifigkeit der Führung des Bearbeitungsaggregats 3 wird dadurch auch in vertikaler Richtung erheblich reduziert. Die Größe der aufbringbaren Bearbeitungskräfte muss verringert werden bzw. das erzielbare Maß an Genauigkeit ist erheblich reduziert. Zudem bringt das Umspannen des Werkstücks zur Bearbeitung von dessen Unterseite weitere Genauigkeitsverluste mit sich.

Dem gegenüber liegt die Aufgabe der vorliegenden Erfindung darin, eine gattungsgemäße Bearbeitungsmaschine so zu verbessern, dass ein Werkstück allseitig auf einfachere Weise und mit höherer Genauigkeit bearbeitet werden kann.

Erfindungsgemäß wird diese Aufgabe bei einer Bearbeitungsmaschine der eingangs genannten Art durch die kennzeichnenden Merkmale des Anspruchs 1 gelöst.

Mit einer erfindungsgemäßen Bearbeitungsmaschine können Werkstücke sechsseitig - d. h. allseitig - bearbeitet werden, ohne dass hierfür ein Umspannen des Werkstücks erforderlich ist. Zudem kann die Rotationsachse in der ersten Arbeitsstellung, d. h. in Grundstellung, in oder nahe der Drehachse verlaufen, so dass in Grundstellung große Bearbeitungskräfte mit hoher Genauigkeit auf das Werkstück aufgebracht werden können. Durch den lotrechten Abstand zwischen Drehachse und Schwenkachse und die beschriebene Verschwenkbarkeit und Anordnung des Bearbeitungsaggregats kann das Bearbeitungsaggregat zum einen in der Grundstellung möglichst nahe an der Drehachse angeordnet sein, so dass die Rotationsachse möglichst nahe an der Drehachse oder sogar in dieser liegt. Zum anderen kann das Bearbeitungsaggregat in einer um 180° verschwenkten zweiten Arbeitsstellung ein zu bearbeitendes Werkstück soweit untergreifen, dass es dessen Unterseite in einem gewünschten Bereich bearbeiten kann. Auf diese Weise ist eine allseitige Bearbeitung des Werkstücks möglich, ohne dass während der Bearbeitung das Werkstück umgespannt oder das Bearbeitungsaggregat gewechselt werden muss. Da jedes Umspannen oder jeder Aggregatwechsel mit Genauigkeitsverlust verbunden ist, kann die allseitige Bearbeitung eines Werkstücks durch eine solche Bearbeitungsmaschine mit höherer Genauigkeit erfolgen. Durch den Abstand zwischen Drehachse und Schwenkachse ist dabei in Grundstellung der Hebelarm zwischen in Richtung der Drehachse verlaufenden Bearbeitungskräften und Drehachse wesentlich geringer und optimalerweise ein Hebelarm nicht vorhanden, so dass in Grundstellung keine Genauigkeitsverluste bei einer Bearbeitung mit großen Kräften hingenommen werden müssen.

Dabei weist der Haltearm erfindungsgemäß einen ersten länglichen Abschnitt auf, der mit einem Ende an dem Schlitten drehbar gelagert ist und längs der Drehachse verläuft und konzentrisch zu dieser angeordnet ist, und einen zweiten länglichen Abschnitt auf, der mit dem freien Ende des ersten Abschnitts fest verbunden ist und sich quer von diesem wegerstreckt und an dem das Bearbeitungsaggregat schwenkbar gelagert ist. Mit diesen Maßnahmen kann sowohl der Abstand zwischen Drehachse und Schwenkachse als auch die Verschwenkbarkeit des Bearbeitungsaggregats in die erste und die zweite Arbeitsstellung auf einfache Weise ausgebildet werden. Eine solche Ausbildung ist zudem äußerst verformungssteif und ermöglicht daher, das Bearbeitungsaggregat mit sehr hoher Genauigkeit auch in einer horizontalen Arbeitsstellung oder in der zweiten, das zu bearbeitende Werkstück untergreifenden Arbeitsstellung zu führen.

Dabei erstreckt sich vorteilhafterweise der zweite Abschnitt des Haltearms schräg zu der von dem Schlitten abgewandten Seite hin. Mit dieser Maßnahme wird ein Untergreifen des Werkstücks durch das Bearbeitungsaggregat erleichtert, da bereits durch das Verschwenken des Bearbeitungsaggregats von der ersten in die zweite Arbeitsstellung das Bearbeitungsaggregat auch zur Unterseite hin, d. h. zu der von dem Schlitten abgewandten Seite des Werkstücks hin, versetzt wird.

In günstiger Weiterbildung der Erfindung weist der Haltearm einen Hohlraum auf, der das Bearbeitungsaggregat in seiner ersten Arbeitsstellung aufnimmt. In einem solchen Hohlraum kann das Bearbeitungsaggregat auf einfache Weise so positioniert werden, dass die Rotationsachse nahe oder sogar in der Drehachse des Haltearms liegt.

Besonders bevorzugt ist dabei der Haltearm gabelförmig ausgebildet und bildet der Zwischenraum zwischen den Gabeln den Hohlraum aus. Die Ausbildung des Hohlraums ist hierdurch mit geringem konstruktivem und fertigungstechnischem Aufwand möglich.

In vorteilhafter Ausgestaltung der Erfindung weichen die Abstände zwischen Schwenkachse und Rotationsachse und zwischen Drehachse und Schwenkachse um maximal 20%, bevorzugt um maximal 10% und besonders bevorzugt um maximal 5% voneinander ab. Je geringer die Abweichung ist, um so näher liegt die Rotationsachse in der Grundstellung an der Drehachse. Je geringer der Abstand zwischen Rotationsachse und Drehachse in Grundstellung ist, um so größer ist die Maschinensteifigkeit in Grundstellung und damit die maximal mögliche Größe der Bearbeitungskräfte und das Maß an Genauigkeit.

Vorzugsweise verläuft die Drehachse vertikal und die Schwenkachse horizontal. Damit erfolgt in Grundstellung eine Bearbeitung der Werkstücke vertikal von oben. Jedoch können die Achsenverläufe an die jeweiligen Anforderungen und Gegebenheiten ohne weiteres angepasst werden.

Die Erfindung wird nachfolgend anhand der Zeichnungen beispielshalber noch näher erläutert. Es zeigen:
- Figur 1: Schlitten, Haltearm und Bearbeitungsaggregat einer ersten Ausführungsform einer vorbekannten Bearbeitungsmaschine, mit unterschiedlichen Arbeitsstellungen des Bearbeitungsaggregats;
- Figur 2: eine der Figur 1 ähnliche Darstellung einer zweiten Ausführungsform einer vorbekannten Bearbeitungsmaschine;
- Figur 3: Schlitten, Haltearm und Bearbeitungsaggregat einer erfindungsgemäßen Bearbeitungsmaschine in unterschiedlichen Arbeitsstellungen; und
- Figur 4: einen Vertikalschnitt durch Schlitten, Haltearm und Bearbeitungsaggregat aus Figur 3 in Grundstellung.

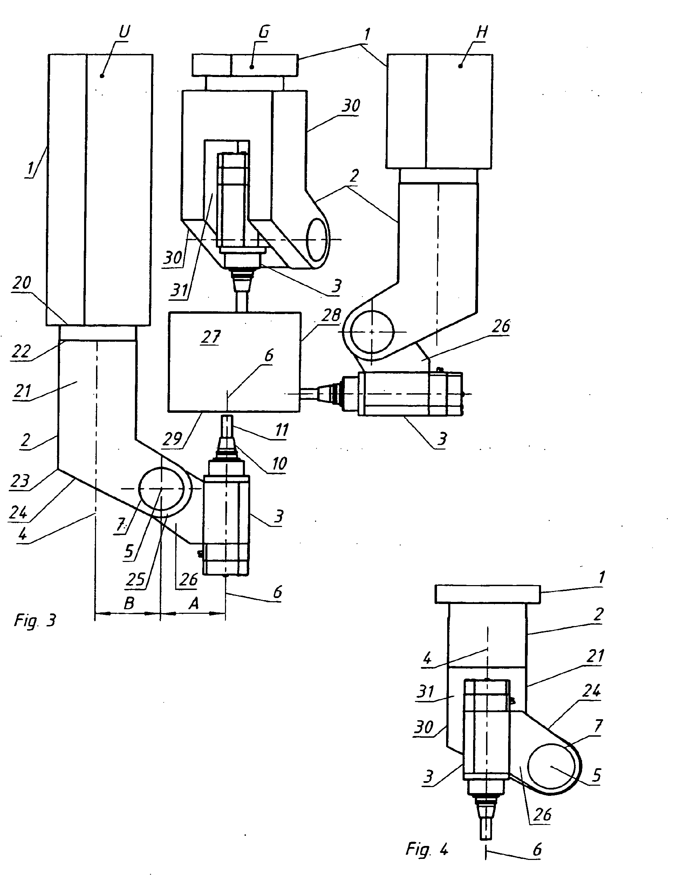

In den Figuren 3 und 4 sind Schlitten 1, Haltearm 2 und Bearbeitungsaggregat 3 eines Ausführungsbeispiels einer erfindungsgemäßen Bearbeitungsmaschine dargestellt, in Figur 3 in drei unterschiedlichen Arbeitsstellungen.

Der Schlitten 1 ist in vertikaler Richtung länglich ausgebildet und an seinem oberen (nicht dargestellten) ersten Ende horizontal und vertikal verfahrbar gelagert. Am in Figur 3 unteren zweiten Ende 20 des Schlittens 1 ist der Haltearm 2 um eine Drehachse 4 drehbar gelagert, die im dargestellten Fall vertikal verläuft.

Der Haltearm 2 weist einen ersten länglichen Abschnitt 21 auf, der konzentrisch zur Drehachse 4 verläuft und mit seinem ersten Ende 22 an dem zweiten Ende 20 des Schlittens 1 um die Drehachse 4 drehbar gelagert ist. An dem zweiten, dem Schlitten 1 abgewandten freien Ende 23 des ersten Abschnitts 21 ist ein zweiter Abschnitt 24 biegesteif angebracht. Der zweite Abschnitt 24 erstreckt sich quer zu dem ersten Abschnitt 21 und schräg zu der dem Schlitten 1 abgewandten Seite hin.

An dem freien Ende 25 des zweiten Abschnitts 24 ist das Bearbeitungsaggregat 3 mit Hilfe eines Schwenkblocks 26 um eine zur Drehachse 4 senkrecht verlaufende, d. h. im dargestellten Fall horizontale Schwenkachse 5 schwenkbar angebracht. Die Schwenkachse 5 wird durch ein Schwenklager 7 ausgebildet. Das Bearbeitungsaggregat 3 weist eine Werkzeugaufnahme 10 mit einer Rotationsachse 6 auf, um die in der Werkzeugaufnahme 10 befestigte Werkzeuge 11 rotierbar sind und die senkrecht zur Schwenkachse 5 verläuft.

Das Bearbeitungsaggregat 3 ist um die Schwenkachse 5 zumindest von einer ersten Arbeitsstellung, in der es die Grundstellung G einnimmt - d. h. die Rotationsachse 6 verläuft parallel zur Drehachse 4 und die Werkzeugaufnahme 10 ist dem Schlitten 1 abgewandt -, um 180° in eine zweite Arbeitsstellung U schwenkbar, in der die Rotationsachse 6 ebenfalls parallel zur Drehachse 4 verläuft und die Werkzeugaufnahme 10 dem Schlitten 1 zugewandt ist.

Die Schwenkachse 5 weist zur Drehachse 4 einen vorgegebenen lotrechten Abstand B auf. Die Rotationsachse 6 wiederum weist zur Schwenkachse 5 einen vorgegebenen lotrechten Abstand A auf. Im dargestellten Ausführungsbeispiel sind diese beiden Abstände A, B gleich ausgeführt, so dass in der Grundstellung G die Rotationsachse 6 in der Drehachse 4 liegt, wie aus Figur 4 ersichtlich ist.

Wenn die Rotationsachse 6 in der Drehachse 4 liegt, liegen die längs der Drehachse 4 verlaufenden, d. h. im dargestellten Fall vertikalen Bearbeitungskräfte konzentrisch zur Drehachse 4 und werden somit mit der höchstmöglichen Maschinensteifigkeit und damit mit höchstmöglicher Maschinengenauigkeit auf das Werkstück 27 aufgebracht.

In Figur 3 ist die Grundstellung G die mittlere der drei dargestellten Arbeitsstellungen. Im dargestellten Ausführungsbeispiel kann in der Grundstellung G das Werkstück 27 von oben bearbeitet werden.

Mit einer Verschwenkung um 90° aus der Grundstellung G heraus nimmt das Bearbeitungsaggregat 3 eine Arbeitsstellung H ein, in der es die Seiten 28 eines Werkstückes 27 horizontal bearbeiten kann. Die horizontale Arbeitsstellung H ist in Figur 3 rechts dargestellt.

Mit einer Verschwenkung um 180° aus der Grundstellung G heraus nimmt das Bearbeitungsaggregat 3 eine Arbeitsstellung U ein, in der es ein Werkstück 27 vertikal von unten bearbeiten kann. Damit kann ohne Umspannen des Werkstücks 27 und ohne Umrüsten der Bearbeitungsmaschine eine Bearbeitung der Unterseite 29 des Werkstücks 27 erfolgen, d. h. der Seite des Werkstücks 27, die dem Schlitten 1 abgewandt ist. Diese Arbeitsstellung U ist in Figur 3 auf der linken Seite dargestellt.

Im dargestellten Ausführungsbeispiel sind die Abstände B, A zwischen Drehachse 4 und Schwenkachse 5 und zwischen Schwenkachse 5 und Rotationsachse 6 so gewählt, dass ihre Summe, d. h. der Abstand zwischen Drehachse 4 und Rotationsachse 6 in der in Figur 3 linken Arbeitsstellung U eine Bearbeitung der halben Unterseite 29 des Werkstücks 27 ermöglicht. Zur Bearbeitung der anderen Hälfte der Unterseite 29 wird der Schlitten 1 mit Haltearm 2 und Bearbeitungsaggregat 3 auf die andere Seite des Werkstückes 27 verfahren.

Wie aus Figur 3 ersichtlich ist, ist der Haltearm 2 in diesem Ausführungsbeispiel gabelförmig ausgebildet, so dass zwischen den Gabeln 30 ein Hohlraum 31 vorhanden ist. Das Bearbeitungsaggregat 3 ist zwischen den Gabeln 30 angeordnet und der Hohlraum 31 so ausgelegt, dass das Bearbeitungsaggregat 3 in den Hohlraum 31 hinein bis in die Grundstellung verschwenkbar ist.

## Patentansprüche

1. Bearbeitungsmaschine mit
- einem Schlitten (1), der horizontal und vertikal verfahrbar gelagert ist;
- einem Haltearm (2), der an dem Schlitten (1) um eine Drehachse (4) drehbar gelagert ist;
- einem Bearbeitungsaggregat (3), das an dem Haltearm (2) um eine senkrecht zur Drehachse (4) verlaufende Schwenkachse (5) schwenkbar gelagert ist und eine Werkzeugaufnahme (10) mit einer senkrecht zur Schwenkachse (5) verlaufenden Rotationsachse (6) aufweist, um die ein Werkzeug (11) rotierbar ist,
- wobei die Schwenkachse (5) und die Rotationsachse (6) einen lotrechten Abstand zueinander aufweisen,
- die Drehachse (4) und die Schwenkachse (5) ebenfalls einen lotrechten Abstand (B) zueinander aufweisen,
- das Bearbeitungsaggregat (3) um mindestens 180° von einer ersten in eine zweite Arbeitsstellung (G, U) verschwenkbar ist, in denen die Rotationsachse (6) jeweils parallel zur Drehachse (4) verläuft,und
- wobei in der ersten Arbeitsstellung (G) der Abstand zwischen Rotationsachse (6) und Drehachse (4) geringer ist als in der zweiten Arbeitsstellung (U) und die Werkzeugaufnahme (10) von dem Schlitten (1) abgewandt ist,
**dadurch gekennzeichnet, dass** der Haltearm (2) einen ersten länglichen Abschnitt (21) aufweist, der mit einem Ende (22) an dem Schlitten (1) drehbar gelagert ist und längs der Drehachse (4) verläuft und konzentrisch zu dieser angeordnet ist, und dass der Haltearm (2) einen zweiten länglichen Abschnitt (24) aufweist, der mit dem freien Ende (23) des ersten Abschnitts (21) fest verbunden ist und sich quer von diesem wegerstreckt und an dem das Bearbeitungsaggregat (3) schwenkbar gelagert ist.

2. Bearbeitungsmaschine nach Anspruch 1, **dadurch gekennzeichnet, dass** der zweite Abschnitt (24) des Haltearms (2) sich schräg zu der von dem Schlitten (1) abgewandten Seite hin erstreckt.

3. Bearbeitungsmaschine nach einem der vorhergehenden Ansprüche, **dadurch gekennzeichnet, dass** der Haltearm (2) einen Hohlraum (31) aufweist, der das Bearbeitungsaggregat (3) in der ersten Arbeitsstellung (G) aufnimmt.

4. Bearbeitungsmaschine nach Anspruch 3, **dadurch gekennzeichnet, dass** der Haltearm (2) gabelförmig ausgebildet ist und der Zwischenraum zwischen den Gabeln (30) den Hohlraum (31) ausbildet.

5. Bearbeitungsmaschine nach einem der vorhergehenden Ansprüche, **dadurch gekennzeichnet, dass** die Abstände (A, B) zwischen Schwenkachse (5) und Rotationsachse (6) und zwischen Drehachse (4) und Schwenkachse (5) um maximal 20%, bevorzugt um maximal 10% und besonders bevorzugt um maximal 5% voneinander abweichen.

6. Bearbeitungsmaschine nach einem der vorhergehenden Ansprüche, **dadurch gekennzeichnet, dass** die Drehachse (4) vertikal und die Schwenkachse (5) horizontal verläuft.

## Claims

1. A machining unit, comprising
- a carriage (1) which is mounted to be movable horizontally and vertically;
- a holding arm (2) which is rotatably mounted on the carriage (1) about an axis of rotation (4);
- a machining assembly (3) which is pivotally mounted on the holding arm (2) about a pivot axis (5) extending perpendicularly to the axis of rotation (4) and includes a tool holder (10) with a rotation axis (6) extending perpendicularly to the pivot axis (5), about which a tool (11) is rotatable,
- wherein the pivot axis (5) and the rotation axis (6) have a perpendicular distance to each other,
- the axis of rotation (4) and the pivot axis (5) likewise have a perpendicular distance (B) to each other,
- the machining assembly (3) is pivotable by at least 180° from a first into a second working position (G, U), in which the rotation axis (6) each extends parallel to the axis of rotation (4), and
- wherein in the first working position (G) the distance between rotation axis (6) and axis of rotation (4) is smaller than in the second working position (U) and the tool holder (10) faces away from the carriage (1),
**characterized in that** the holding arm (2) has a first oblong portion (21) which with one end (22) is rotatably mounted on the carriage (1) and extends along the axis of rotation (4) and is arranged concentrically to the same, and that the holding arm (2) has a second oblong portion (24) which is firmly connected with the free end (23) of the first portion (21) and transversely extends away from the same and on which the machining assembly (3) is pivotally mounted.

2. The machining unit according to claim 1, **characterized in that** the second portion (24) of the holding arm (2) obliquely extends towards the side facing away from the carriage (1).

3. The machining unit according to any of the preceding claims, **characterized in that** the holding arm (2) includes a cavity (31) which receives the machining assembly (3) in the first working position (G).

4. The machining unit according to claim 3, **characterized in that** the holding arm (2) is formed fork-like and the space between the forks (30) forms the cavity (31).

5. The machining unit according to any of the preceding claims, **characterized in that** the distances (A, B) between pivot axis (5) and rotation axis (6) and between axis of rotation (4) and pivot axis (5) differ from each other by not more than 20%, preferably by not more than 10% and particularly preferably by not more than 5%.

6. The machining unit according to any of the preceding claims, **characterized in that** the axis of rotation (4) extends vertically and the pivot axis (5) extends horizontally.

## Revendications

1. Machine d'usinage comprenant
- un chariot (1) qui est monté en déplacement horizontal et vertical;
- un bras de maintien (2), qui est monté sur le chariot (1) en pivotement autour d'un axe de pivotement (4);
- un groupe d'usinage (3) qui est monté sur le bras de maintien (2) en basculement autour d'un axe de basculement (5) s'étendant perpendiculairement à l'axe de pivotement (4) et comprend un récepteur d'outils (10) avec un axe de rotation (6) s'étendant perpendiculairement à l'axe de basculement (5), autour duquel l'outil (11) est capable de rotation,
- dans laquelle l'axe de basculement (5) et l'axe de rotation (6) présentent l'un par rapport à l'autre une distance perpendiculaire,
- l'axe de pivotement (4) et l'axe de basculement (5) présentent également l'un par rapport à l'autre une distance perpendiculaire (B),
- le groupe d'usinage (3) est capable de basculer sur au moins 180° depuis une première position de travail jusque dans une seconde position de travail (G, U) dans lesquelles l'axe de rotation (6) s'étant respectivement parallèlement à l'axe de pivotement (4), et
- dans la première position de travail (G) la distance entre l'axe de rotation (6) et l'axe de pivotement (4) et plus faible que dans la seconde position de travail (U) et le récepteur d'outils (10) est détourné du chariot (1),
**caractérisée en ce que** le bras de maintien (2) comprend un premier tronçon allongé (21) qui est monté en pivotement sur le chariot (1) par une extrémité (22) et s'étend le long de l'axe de pivotement (4) et agencé concentriquement à celui-ci, et **en ce que** le bras de maintien (2) comprend un second tronçon allongé (24) qui est fermement relié à l'extrémité libre (23) du premier tronçon (21) et s'étend en éloignement transversalement à celui-ci, et sur lequel le groupe d'usinage (3) est monté en basculement.

2. Machine d'usinage selon la revendication 1, **caractérisée en ce que** le second tronçon (24) du bras de maintien (2) s'étend en oblique vers le côté détourné du chariot (1).

3. Machine d'usinage selon l'une des revendications précédentes, **caractérisée en ce que** le bras de maintien (2) comporte une cavité (31) qui reçoit le groupe d'usinage (3) dans la première position de travail (G).

4. Machine d'usinage selon la revendication 3, **caractérisée en ce que** le bras de maintien (2) est réalisé en forme de fourche, et l'intervalle entre les fourches (30) constitue la cavité (31).

5. Machine d'usinage selon l'une des revendications précédentes, **caractérisée en ce que** les distances (A, B) entre l'axe de basculement (5) et l'axe de rotation (6), et entre l'axe de pivotement (4) et l'axe de basculement (5) diffèrent au maximum de 20 %, de préférence au maximum 10 %, et de manière particulièrement préférée au maximum de 5 %.

6. Machine d'usinage selon l'une des revendications précédentes, **caractérisée en ce que** l'axe de pivotement (4) s'étend verticalement et l'axe de basculement (5) s'étend horizontalement.
